# FASCICULE DE BREVET EUROPEEN

(11) **EP 2 047 214 B1**
(45) Date de publication et mention de la délivrance du brevet: **13.08.2014**
(21) Numéro de dépôt: 07764908.5
(22) Date de dépôt: 28.06.2007
(51) Int. Cl.: G01C 21/36, G08G 1/0969

(54) **PROCEDE ET DISPOSITIF DE GUIDAGE POUR VEHICULE AVEC AFFICHAGE MULTI-MODES**
VERFAHREN UND VORRICHTUNG ZUR ZIELFÜHRUNG EINES FAHRZEUGES MIT EINER ANZEIGE MIT MEHREREN BETRIEBSARTEN
METHOD AND DEVICE FOR GUIDING A VEHICLE WITH MULTIMODE DISPLAY

(30) Priorité: 24.07.2006 FR 0606826
(43) Date de publication de la demande: 15.04.2009
(73) Titulaire: Michelin Travel Partner, 92100 Boulogne-Billancourt (FR)
(72) Inventeur: BULLIER, Renaud, F-78100 Saint Germain en Laye (FR)
(74) Mandataire: Bauvir, Jacques
(86) Numéro de dépôt international: PCT/EP2007/005718
(87) Numéro de publication internationale: WO 2008/011952

(56) Documents cités:
- EP-A- 1 555 512
- EP-A- 1 662 231
- EP-A2- 0 738 876
- EP-A2- 1 260 792
- FR-A1- 2 634 707

## Description

La présente invention concerne un procédé et un dispositif de guidage pour véhicule routier, permettant, à partir d'une part d'un itinéraire entre un point de départ D et un point d'arrivée A comportant une pluralité de points d'instruction PI auxquelles sont associées des instructions de guidage, et d'autre part d'informations en temps réel sur la position du véhicule le long dudit itinéraire, de représenter sur un moyen d'affichage, en alternance, un premier mode, régional, et, un second mode, local, distinct du premier.

Les dispositifs permettant d'effectuer des calculs d'itinéraires et d'assurer le guidage d'un véhicule lors du parcours le long de cet itinéraire sont de plus en plus courants. En fonction de la gamme de produit, diverses techniques sont mises en oeuvre afin de rendre le guidage le plus ergonomique et le plus sécuritaire possible. Une des fonctionnalités techniques le plus répandues consiste à présenter la position du véhicule sur une portion restreinte de l'itinéraire global. Le conducteur peut alors bien se situer dans l'environnement immédiat. Diverses informations complémentaires sont souvent présentées en plus, telles que la distance restante jusqu'à l'arrivée, le temps de parcours estimé, la distance jusqu'à la prochaine manoeuvre, etc. Ces informations sont présentées selon des formats numériques, symboliques, ou textuels. L'ensemble de ces éléments fournis au conducteur sont le plus souvent insuffisants pour lui permettre d'avoir une bonne connaissance à la fois de l'environnement immédiat et des étapes à venir. Les procédés et dispositifs actuels ne fournissent des données physiques que sur un seul type d'information à la fois. Soit les données géographiques et physiques fournies sont purement locales, ou encore elles sont plus globales, comme par exemples avec une vue sur l'ensemble de l'itinéraire, avec dans ce dernier cas un déficit d'informations sur l'environnement immédiat.

Le document EP 1662231 décrit un procédé de guidage selon le préambule de la revendication 1.

Il y a donc une carence dans les produits et procédés actuels pour produire des interfaces permettant d'associer à la fois des informations visuelles sur l'environnement immédiat et sur un zone beaucoup plus large, de façon à permettre au conducteur d'anticiper les manoeuvres à venir et de bien connaître le situation générale par rapport à l'itinéraire à suivre.

Pour pallier ces inconvénients, l'invention prévoit un procédé de guidage pour véhicule routier, permettant, à partir d'une part d'un itinéraire entre un point de départ D et un point d'arrivée A comportant une pluralité de points d'instruction PI auxquelles sont associées des instructions de guidage, et d'autre part d'informations en temps réel sur la position du véhicule le long dudit itinéraire, de représenter sur un moyen d'affichage au moins une portion active PA d'itinéraire, (la portion sur laquelle le véhicule se trouve) ainsi que la position en temps réel dudit véhicule sur cette portion active et une portion adjacente à venir dudit itinéraire, soit, en fonction de la distance entre la position actuelle dudit véhicule et le prochain point d'instruction PI, selon un mode régional R, ou selon un mode local L, ledit procédé comportant les étapes consistant à :
- déterminer la position du véhicule PV par rapport à l'itinéraire ;
- en fonction de cette position du véhicule PV, identifier le prochain point d'instruction PI-next de l'itinéraire auquel est associé une instruction de guidage ;
- calculer la distance PV/PI-next entre la position actuelle du véhicule et le prochain point d'instruction PI ;
- calculer la distance PV/PI-last entre la position actuelle du véhicule et le dernier point d'instruction PI ;
- si la distance PV/PI-next est supérieure à un seuil HIGH, et la distance PV/PI-last est supérieure à un seuil CHANGE, le mode de présentation de l'itinéraire utilisé passe au mode régional R ;
- si la distance PV/PI-next est inférieure à un seuil LOW, le mode de présentation de l'itinéraire utilisé passe au mode local L ;
- le mode régional R consistant en une représentation d'une zone géographique comportant notamment les tronçons routiers correspondant à au moins une portion de l'itinéraire à effectuer incluant la portion active de l'itinéraire et une zone tampon (par exemple 10 ou 20 ou plus km d'itinéraire en plus), les tronçons correspondant à ceux de l'itinéraire à effectuer étant mis en évidence ;
- le mode local L comportant d'une part, un secteur actif, avec une représentation d'une portion active de l'itinéraire (la portion sur laquelle le véhicule se trouve) et la position du véhicule guidé le long de cette portion active, et d'autre part un secteur explicatif, comportant une représentation schématique du prochain point d'instruction PI montrant schématiquement les éléments du réseau routier permettant d'illustrer précisément le type de manoeuvre à effectuer et à quel endroit l'effectuer.

Grâce à ces caractéristiques, il est possible de présenter simultanément des informations de nature différentes, et notamment la position actuelle et la prochaine action à effectuer, et ceci même lorsque la distance entre les deux est importante. Le fait de consacrer une zone d'affichage uniquement pour décrire le prochain point d'instruction, sans autre élément physique tel que la position actuelle du véhicule ou géographique tel que les tronçons adjacents, ni d'éventuel autre élément géographique de l'environnement immédiat de ce point, permet de construire la représentation schématique de façon très riche, précise, de façon à fournir à l'utilisateur des indications les plus fidèles possible à la réalité du terrain.

Selon un mode de réalisation avantageux, le secteur actif reproduit virtuellement la mobilité du véhicule dans son environnement immédiat. Cet aspect est important puisqu'il place l'utilisateur dans un contexte très réaliste, en fonction de son déplacement tel qu'il se réalise sur la route.

Selon un mode de réalisation avantageux, le secteur explicatif représente de façon fixe, tant que le véhicule n'a pas franchi le prochain point d'instruction PI affiché, une représentation schématique expliquant la construction géométrique détaillée de ce point d'instruction PI. A contrario du secteur actif, il est utile de présenter ce secteur sans adjoindre de déplacement (absolu ou relatif), afin d'en faciliter la compréhension et pour mieux anticiper la manoeuvre à venir. Par ailleurs, le fait d'afficher simultanément un secteur actif avec un déplacement relatif véhicule/route et un secteur explicatif sans déplacement relatif, contribue à faciliter la distinction entre la portion active et les événements à venir ultérieurement, chacun étant présenté de façon indépendante.

De manière avantageuse, la valeur attribuée au seuil HIGH est supérieure à celle attribuée au seuil LOW, et de préférence la valeur attribuée au seuil HIGH est plus de deux fois supérieure à celle attribuée au seuil LOW.

Selon un mode de réalisation avantageux, le seuil HIGH correspond à une distance PV/PI-next supérieure à 15 km, et de préférence supérieure à 20 km.

Le seuil CHANGE correspond avantageusement à une distance PV/PI-last supérieure à 150 m, et de préférence supérieure à 1 km.

Le seuil LOW correspond avantageusement à une distance PV/PI-next inférieure à 10 km, et de préférence inférieure à 5 km.

Selon un mode de réalisation avantageux, la représentation partielle de l'itinéraire correspondant à la portion active est représentée en perspective.

Selon un autre mode de réalisation avantageux, la représentation du mode régional R comporte une vue en deux dimensions de la zone géographique concernée.

L'invention concerne également un dispositif de guidage pour véhicule routier, permettant de fournir à un utilisateur des informations visuelles de guidage le long d'un itinéraire donné entre un point de départ D et un point d'arrivée A comportant une pluralité de points d'instruction PI auxquelles sont associées des instructions de guidage, ledit dispositif comportant au moins un processeur, susceptible de calculer au moins une portion d'itinéraire, des instructions de mise en oeuvre, un moyen de géo localisation, permettant de fournir en temps réel des informations sur la position du véhicule à guider le long dudit itinéraire, un moyen d'affichage, permettant de fournir une représentation visuelle d'au moins une portion d'itinéraire ainsi que ladite position du véhicule guidé le long de cet itinéraire selon un premier mode, ledit moyen d'affichage étant adapté pour représenter, en alternance avec ledit premier mode, au moins une portion dudit itinéraire selon un second mode, dans lequel ladite portion d'itinéraire est représentée d'une part avec une représentation d'une portion active d'itinéraire et la position du véhicule guidé le long de cette portion active, et d'autre part une représentation schématique du prochain point d'instruction PI montrant schématiquement les éléments du réseau routier permettant d'illustrer précisément le type de manoeuvre à effectuer et à quel endroit l'effectuer.

Selon un mode de réalisation avantageux, le passage d'un mode d'affichage à l'autre est effectué automatiquement en fonction de la distance entre la position actuelle dudit véhicule PV et le prochain point d'instruction PI.

Dans un mode de réalisation avantageux, le passage d'un mode d'affichage à l'autre dépend également de la distance entre la position actuelle dudit véhicule PV et le dernier point d'instruction PI franchi.

Tous les détails de réalisation sont donnés dans la description qui suit, complétée par les figures 1 à 7, dans lesquelles :

les figures 1 à 3 illustrent des exemples de représentation du mode local L avec deux fenêtres présentant simultanément d'une part une portion active mobile de l'itinéraire en cours de réalisation, et une représentation schématique fixe du prochain point d'instruction PI ;

la figure 4 représente un exemple de représentation du mode régional R avec une seule fenêtre présentant une portion plus importante de l'itinéraire que dans le mode local, avec l'environnement régional correspondant ;

les figures 5 et 6 illustrent d'autres exemples de représentation du mode local avec deux fenêtres présentant simultanément d'une part une portion active mobile de l'itinéraire en cours de réalisation, et une représentation schématique fixe du prochain point d'instruction PI ;

la figure 7 présente un organigramme fonctionnel simplifié montrant les critères utilisés pour passer automatiquement d'un mode à l'autre.

Dans la présente description, les termes suivants sont utilisés notamment avec les significations suivantes :

On désigne « noeud» un point d'intersection entre un premier élément de réseau cartographique ou routier (ou autre réseau) et un second élément d'un tel réseau, notamment l'intersection entre une pluralité de voies routières. Un noeud désigne également un point de changement physique ou qualitatif d'un tronçon, comme par exemple un passage de deux à trois voies, un changement de la limitation de vitesse, une zone (même temporaire) faisant l'objet de travaux, un point de rupture tel une frontière, etc.

On désigne « tronçon » une portion de voie entre deux noeuds.

On désigne « carrefour » une intersection de plusieurs routes au même niveau.

On désigne un « itinéraire » un sous-ensemble de points issus des éléments de modélisation d'un réseau routier, créant un lien entre des données de façon à leur permettre de modéliser ou représenter un trajet ou parcours sur ledit réseau routier permettant de relier un point de départ et un point d'arrivée. Ce sous-ensemble est constitué par les données relatives aux tronçons permettant de relier le départ et l'arrivée. Par données relatives aux tronçons, on entend les identifications, les longueurs des tronçons et les coordonnées spatiales.

Ce sous-ensemble de points peut servir à représenter ledit itinéraire sous différentes formes, par exemple au moyen d'une représentation graphique, de préférence sous la forme d'une carte comprenant le point de départ, le point d'arrivée, et les tronçons formant ledit itinéraire, ou sous la forme d'une « feuille de route » ou liste d'instructions, comportant une énumération ou suite d'instructions écrites ou représentées par des pictogrammes, expliquant à un éventuel conducteur d'un véhicule, les différentes étapes à suivre pour effectuer ledit itinéraire.

Un itinéraire peut être généré de façon classique, à l'aide d'un calculateur d'itinéraire, qui permet d'obtenir, pour un point de départ et un point d'arrivée donnés, un trajet routier reliant ces deux points. De façon classique, différents critères peuvent être utilisés pour favoriser un type d'itinéraire, par exemple autoroutier, par rapport à un ou plusieurs autres. Pour que l'utilisateur puisse facilement parcourir l'itinéraire, ce dernier comporte en général une série de points d'instructions ou de guidage, auxquels sont associées des instructions concernant les actions à effectuer à ces différents endroits afin de pouvoir suivre l'itinéraire prévu. Par exemple, tourner à gauche, prendre la voie de droite, etc. Dès qu'une manoeuvre doit être effectuée par le conducteur pour suivre l'itinéraire, un point d'instruction est de préférence prévu. Ainsi, un itinéraire donné peut comporter plusieurs dizaines de points d'instruction PI.

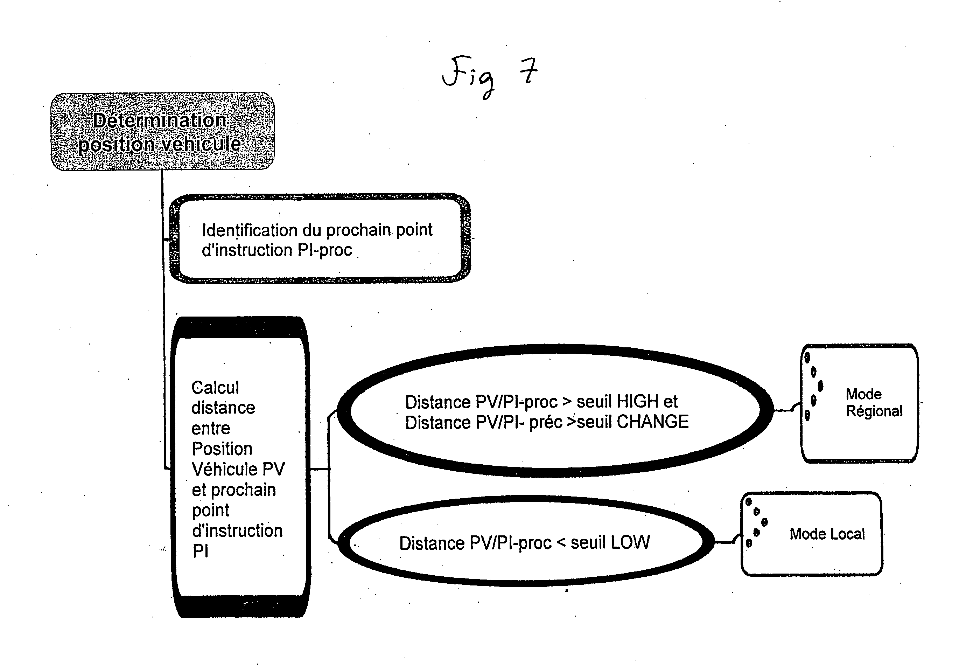

La figure 7 présente un organigramme simplifié illustrant les principes fondamentaux de l'invention. Il est essentiel de connaître la position du véhicule PV par rapport à l'itinéraire à effectuer. Cette opération peut être effectuée à l'aide de différents moyens connus, tels des capteurs, gyroscopes, ou autres, mais de préférence à l'aide d'un système de géo localisation comme par exemple un système GPS (« Global Positioning System »). Un tel système permet de connaître en tout temps la position réelle du véhicule.

A partir de cette position, de la direction suivie par le véhicule et des données de l'itinéraire à effectuer, le prochain point d'instruction PI-next peut être identifié.

Il est alors possible de calculer la distance PV/PI-next entre la position actuelle du véhicule et le prochain point d'instruction PI, tout comme la distance PV/PI-last entre la position actuelle du véhicule et le dernier point d'instruction PI. Un changement de mode d'affichage pourra ou non être déclenché, en fonction de valeurs de seuils pré-établies.

Tout d'abord, pour le passage du mode local L au mode régional R, on considère un seuil HIGH, qui permet d'établir une frontière entre les conditions dans lesquelles le mode local est moins avantageux que le mode régional. Par ailleurs, on adjoint de préférence un second seuil, le seuil CHANGE, qui délimite une zone tampon immédiatement après le passage du dernier point d'instruction PI, dans laquelle, même si le seuil HIGH est franchi, il est encore trop tôt pour passer au mode régional. En effet, un changement prématuré de mode pourrait déstabiliser l'utilisateur, qui viendrait à peine de compléter la plus récente instruction.

Ainsi, si la distance entre la position du véhicule et le prochain point d'instruction PV/PI-next est supérieure à un seuil HIGH, et si la distance entre la position du véhicule et le prochain point d'instruction PV/PI-last est supérieure à un seuil CHANGE, le mode de présentation de l'itinéraire utilisé passe au mode régional R.

Les valeurs des seuils HIGH et CHANGE peuvent varier selon les produits et les types d'application. A titre d'exemple, la valeur attribuée au seuil HIGH est de 15 km, et de préférence de 20 km et encore plus préférentiellement de 25 km. La valeur du seuil CHANGE peut par exemple être de 10 m ou 15 m, dans d'autres cas prendre une valeur plus importante telle que 1 ou 2 ou quelques km.

Ensuite, pour le passage du mode régional au mode local, on considère un seuil LOW, qui permet d'établir une frontière entre les conditions dans lesquelles le mode régional est moins avantageux que le mode local. Dans ce cas, l'adjonction d'un seuil complémentaire n'est pas indispensable, puisque le mode régional est normalement présent depuis une distance et donc un temps suffisant avant le passage au mode local, du fait que les valeurs de seuil HIGH sont de préférence supérieures aux valeurs de seuil LOW.

Ainsi, si la distance entre la position du véhicule et le prochain point d'instruction PV/PI-next est inférieure à un seuil LOW, le mode de présentation de l'itinéraire utilisé passe au mode local L .

Les valeurs de seuil LOW peuvent varier selon les produits et les types d'application. A titre d'exemple, la valeur attribuée au seuil LOW est de 5 km, et de préférence de 3 km et encore plus préférentiellement de 2 km.

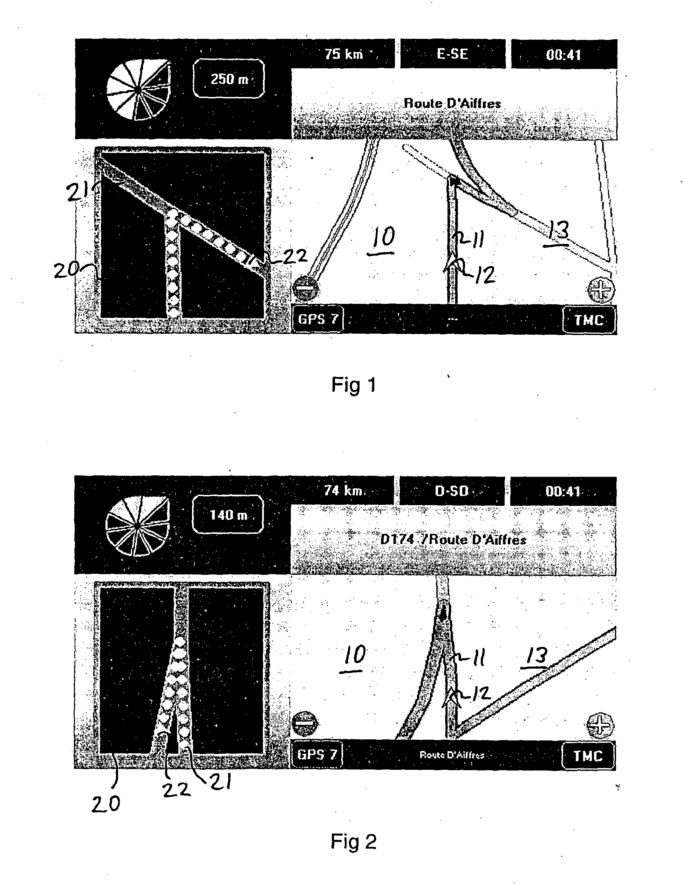

Les figures 1 à 3 illustrent différents exemples montrant des représentations en mode local L, selon l'invention. D'un premier côté de l'écran, dans ces exemples, du côté droit, un premier secteur ou une première fenêtre, désigné ici secteur actif 10 est consacré à une représentation du tronçon actif 11, sur lequel le véhicule est localisé ou positionné grâce à une représentation symbolique 12. Le tronçon actif est de préférence représenté entouré de son environnement immédiat 13. En pratique, il est avantageux de représenter le secteur actif de façon à montrer la route que l'utilisateur va parcourir dans les toutes prochaines secondes (ou minutes en cas de vitesse très lente). Le secteur actif 10 est de préférence prévu de sorte que le véhicule soit avantageusement représenté dans la portion centrale inférieure de la zone d'affichage, la route à parcourir étant préférentiellement représentée pour que le déplacement soit sensiblement vers le haut de l'affichage. Lors de l'avancement du véhicule, du fait du guidage en temps réel, les différents éléments cartographiques affichés se déplacent avantageusement vers le bas de la zone d'affichage, simulant de ce fait l'avancement du véhicule dans le sens inverse. Lors d'un changement de direction du véhicule, les éléments cartographiques illustrés sont préférentiellement ré agencés de façon à continuer à représenter le véhicule dans la même zone, simulant un déplacement vers le haut de la zone d'affichage. Bien sûr, pour diverses variantes, le déplacement virtuel du véhicule vers le haut de l'écran peut être remplacé telles que des déplacements vers le bas, à gauche ou à droite.

Le secteur actif 10 peut être représenté en deux ou trois dimensions, selon les variantes disponibles et les éventuelles préférences de l'utilisateur. L'environnement immédiat 13 comporte les éventuels segments routiers adjacents et/ou voisions à la zone du tronçon actif. Les noms et/ou numéros des tronçons peuvent aussi être affichés. De manière avantageuse, le secteur actif 10 présente un secteur géographique pouvant aller de quelques dizaines de mètres, comme par exemple 10, 20, 50 ou 100 m, à quelques km, comme par exemple 1, 2, 5 ou 10 km.

Dans une autre zone ou fenêtre de l'écran, un secteur explicatif 20 ou zone de représentation schématique, est prévue, dans laquelle la prochaine manoeuvre à effectuer est présentée au moyen d'une représentation très complète et détaillée d'une part de l'endroit où cette manoeuvre doit être effectuée, et d'autre part de la trajectoire à suivre par le véhicule lors de la réalisation de cette manoeuvre.

De préférence, ce secteur 20 comporte uniquement les éléments nécessaires à l'explication de la prochaine manoeuvre ou point d'instruction. Les éléments de l'environnement qui ne servent pas à expliquer cette portion de parcours sont de préférence non représentés. Par exemple, à la figure 1, il s'agit de tourner à droite à l'intersection. A la figure 2, il s'agit d'un virage très serré à gauche. Comme on le voit dans ces exemples, une portion d'itinéraire très restreinte est représentée dans ce secteur, ce qui permet d'avoir un niveau de détail supérieur à celui du secteur actif. L'utilisateur peut ainsi bien comprendre et visualiser le prochain point d'instruction PI et mieux anticiper la manoeuvre correspondante.

On comprend donc que le secteur actif 10 vise à situer l'utilisateur dans son environnement immédiat lors du déplacement du véhicule. A cette fin, ce secteur reproduit virtuellement la mobilité du véhicule dans cet environnement, de préférence en utilisant un fond cartographique mobile ou déroulant. L'élément 12 de représentation symbolique du véhicule peut aussi se déplacer et/ou tourner, pour ajouter au réalisme de la représentation du déplacement.

A l'opposée, le secteur explicatif 20 représente de façon fixe, tant que le véhicule n'a pas franchi le prochain point d'instruction PI affiché, la représentation schématique expliquant la construction géométrique détaillée du point d'instruction PI à venir. Cette construction géométrique est reproduite à partir des données cartographiques digitalisées fournies soit avec l'itinéraire donné, soit à partir de données mémorisées ou stockées sur un support mémoire.

De préférence, la représentation schématique du secteur 20 est orientée dans une direction sensiblement correspondante à celle présentée (ou à venir) dans le secteur actif 10. Les indications des deux fenêtres sont alors homogènes.

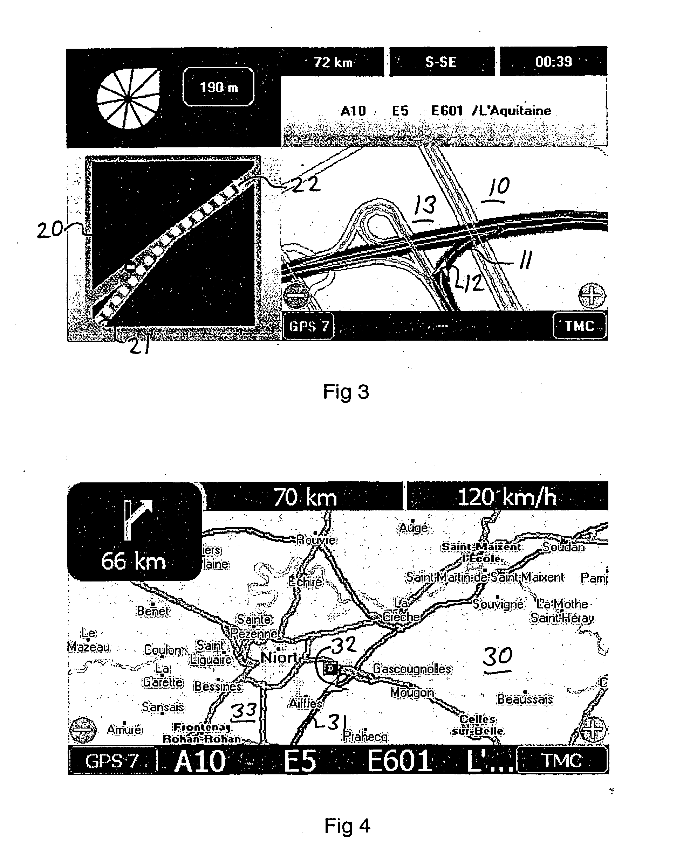

La figure 4 illustre un exemple de représentation 30 selon le mode régional R. On retrouve les informations cartographiques d'une part de l'environnement immédiat du secteur où se trouve le véhicule, mais en plus, selon la longueur de l'itinéraire à effectuer, soit les informations concernant l'environnement intermédiaire pour un itinéraire très long qui est alors représenté partiellement, soit les informations concernant l'environnement global dans le cas d'un itinéraire plus court, représenté dans sa globalité. La représentation symbolique du véhicule 32 est avantageusement placée dans une portion sensiblement centrale de la représentation 30. L'itinéraire à suivre 31 est représenté par exemple par une mise en évidence des tronçons concernés affichés avec une teinte ou coloration distincte, ou par tout autre moyen. Lors des déplacements du véhicule, le mode global est dynamique : soit la représentation symbolique, soit le fond cartographique, soit les deux simultanément ou successivement, se déplacent de façon à reproduire le déplacement du véhicule. Contrairement au mode local, où de courtes distances sont représentées, ce qui engendre un effet de mobilité plus rapide des éléments du secteur actif, pour une même vitesse donnée, le mode régional produit un effet de déplacement relatif plus faible. De manière avantageuse, le fond cartographique est orienté de sorte que le Nord se trouve vers le haut de l'affichage.

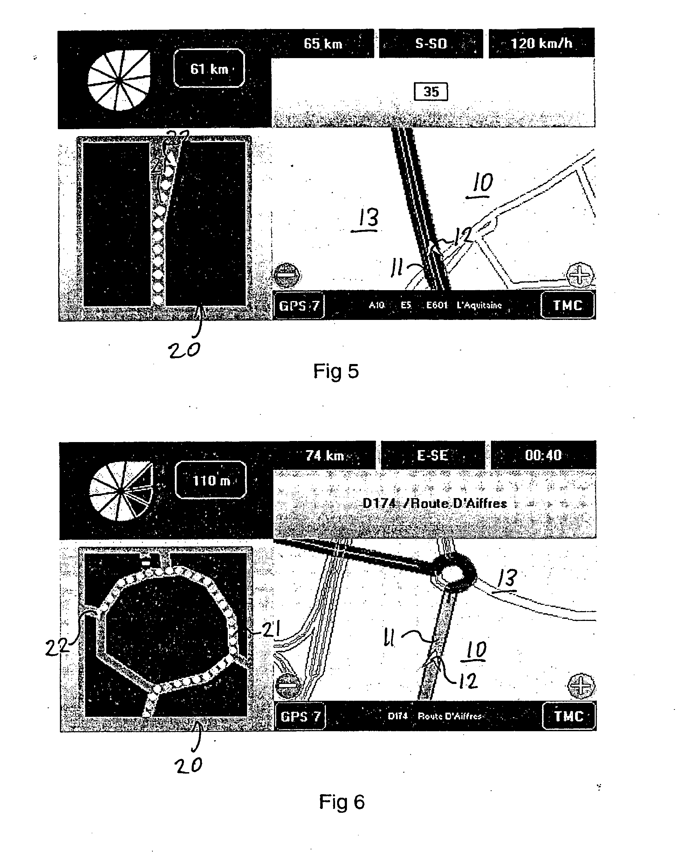

Les figures 5 et 6 présentent d'autres exemples d'affichage selon le mode local L. A la figure 5, on remarque que le tronçon actif 11 du secteur actif 10 ne permet pas d'illustrer le prochain point d'instruction PI, puisque que le secteur actif ne présente que l'environnement immédiat. Dans cet exemple, le prochain point PI est à 6 km. Grâce à la présence du secteur explicatif 20, non seulement l'utilisateur peut obtenir des indications sur la prochaine manoeuvre, mais il peut anticiper la manoeuvre par une connaissance de la construction géométrique détaillée de ce point.

La figure 6 montre un exemple avec un point d'instruction complexe, que le secteur explicatif permet de représenter de façon complète et précise.

De nombreuses variantes du procédé et dispositif selon l'invention sont envisageables. Par exemple, il est possible de baser les critères de passage d'un mode à l'autre sur d'autres paramètres physiques, comme par exemple le temps, ou encore sur une combinaison de paramètres.

## Revendications

1. Procédé de guidage pour véhicule routier, permettant, à partir d'une part d'un itinéraire entre un point de départ 0 et un point d'arrivée A comportant une pluralité de points d'instruction PI auxquelles sont associées des instructions de guidage, et d'autre part d'informations en temps réel sur la position du véhicule le long dudit itinéraire, de représenter sur un moyen d'affichage au moins une portion active PA d'itinéraire, ainsi que la position en temps réel dudit véhicule sur cette portion active et une portion adjacente à venir dudit itinéraire selon deux modes de représentation distincts, ces deux modes de représentation consistant en un mode local L et un mode régional R ;
• le mode local L comportant d'une part un secteur actif (10), avec une représentation d'une portion active (11) de l'itinéraire et la position du véhicule(12) guidé le long de cette portion active, et d'autre part un secteur explicatif(20), comportant une représentation schématique (21) du prochain point d'instruction PI montrant schématiquement les éléments du réseau routier permettant d'illustrer précisément le type de manoeuvre à effectuer et à quel endroit l'effectuer ;
• le mode régional R consistant en une représentation d'une zone géographique comportant notamment les tronçons routiers correspondant à au moins une portion de l'itinéraire (31) à effectuer incluant la portion active de l'itinéraire et une zone tampon (33), les tronçons correspondant à ceux de l'itinéraire à effectuer étant mis en évidence ;
le mode de transition entre ces deux modes étant établi en fonction de la distance entre la position actuelle dudit véhicule et le prochain point d'instruction PI, avec les étapes consistant à :
a) déterminer la position du véhicule PV par rapport à l'itinéraire ;
b) en fonction de cette position du véhicule PV, identifier le prochain point d'instruction PI-next de l'itinéraire auquel est associé une instruction de guidage ;
c) calculer la distance PV/PI-next entre la position actuelle du véhicule et le prochain point d'instruction PI ;
le procédé étant **caractérisé en ce qu'**il comporte par ailleurs les étapes consistant à :
d) calculer la distance PV/PI-last entre la position actuelle du véhicule et le dernier point d'instruction PI ;
e) si la distance PV/PI-next est supérieure à un seuil HIGH, et la distance PV/PI-last est supérieure à un seuil CHANGE, le mode de présentation de l'itinéraire utilisé passe au mode régional R ;
f) si la distance PV/PI-next est inférieure à un seuil LOW, le mode de présentation de l'itinéraire utilisé passe au mode local L ;
la valeur attribuée au seuil HIGH étant supérieure à celle attribuée au seuil LOW.

2. Procédé de guidage pour véhicule routier selon la revendication 1, dans lequel la valeur attribuée au seuil HIGH est plus de deux fois supérieure à celle attribuée au seuil LOW.

3. Procédé de guidage pour véhicule routier selon l'une des revendications précédentes, dans lequel le seuil HIGH correspond à une distance PV/PI-next supérieure à 15 km, et de préférence supérieure à 20 km.

4. Procédé de guidage pour véhicule routier selon l'une des revendications précédentes, dans lequel le seuil CHANGE correspond à une distance PV/PI-last supérieure à 150 m, et de préférence supérieure à 1 km.

5. Procédé de guidage pour véhicule routier selon l'une des revendications précédentes, dans lequel le seuil LOW correspond à une distance PV/PI-next inférieure à 10 km, et de préférence inférieure à 5 km.

6. Procédé de guidage pour véhicule routier selon l'une des revendications précédentes, dans lequel le secteur actif (10) reproduit virtuellement la mobilité du véhicule dans son environnement immédiat.

7. Procédé de guidage pour véhicule routier selon l'une des revendications précédentes, dans lequel le secteur explicatif (20) représente de façon fixe, tant que le véhicule n'a pas franchi le prochain point d'instruction PI affiché, une représentation schématique (21) expliquant la construction géométrique détaillée de ce point d'instruction PI.

8. Dispositif de guidage pour véhicule routier comportant au moins un processeur, susceptible de calculer au moins une portion d'itinéraire, des instructions de mise en oeuvre, un moyen de géolocalisation, permettant de fournir en temps réel des informations sur la position du véhicule à guider le long dudit itinéraire, un moyen d'affichage, permettant de fournir une représentation visuelle d'au moins une portion d'itinéraire ainsi que ladite position du véhicule guidé le long de cet itinéraire, ledit dispositif étant spécialement adapté pour la mise en oeuvre du procédé de guidage selon l'une des revendications 1 à 7.

9. Dispositif de guidage selon la revendication 8, dans lequel la valeur attribuée au seuil HIGH est plus de deux fois supérieure à celle attribuée au seuil LOW.

## Patentansprüche

1. Führungsverfahren für Straßenfahrzeug, das es erlaubt, einerseits ausgehend von einer Route zwischen einem Ausgangspunkt 0 und einem Ankunftspunkt A, die eine Vielzahl von Anweisungspunkten PI aufweist, welchen Führungsanweisungen zugewiesen sind, und andererseits von Informationen in Echtzeit über die Position des Fahrzeugs entlang der Route, auf einem Anzeigemittel mindestens einen aktiven Routenteil PA sowie die Position in Echtzeit des Fahrzeugs auf diesem aktiven Teil und einem nächsten benachbarten Teil der Route gemäß zwei getrennten Darstellungmodi darzustellen, wobei die zwei Darstellungsmodi aus einem lokalen Modus L und einem regionalen Modus R bestehen,
- wobei der lokale Modus L einerseits einen aktiven Sektor (10) mit einer Darstellung eines aktiven Teils (11) der Route und der Position des Fahrzeugs (12), das entlang dieses aktiven Teils geführt wird, und andererseits einen Erklärungssektor (20) aufweist, der eine schematische Darstellung (21) des nächsten Anweisungspunkts PI aufweist, die schematisch die Elemente des Straßennetzes zeigt, die es erlauben, den Manövertyp, der auszuführen ist, und den Ort, an dem er auszuführen ist, präzise zu veranschaulichen,
- wobei der regionale Modus R aus einer Darstellung einer geographischen Zone besteht, die insbesondere Straßenabschnitte aufweist, die mindestens einem Teil der zurückzulegenden Route (31) entspricht, der den aktiven Teil der Route und eine Pufferzone (33) aufweist, wobei die Abschnitte, die denjenigen der zurückzulegenden Route entsprechen, aufgezeigt sind,
wobei der Übergangsmodus zwischen diesen zwei Modi in Abhängigkeit von der Entfernung zwischen der aktuellen Position des Fahrzeugs und dem nächsten Anweisungspunkt PI erstellt wird, mit den Schritten, die aus Folgendem bestehen:
a) Bestimmen der Position des Fahrzeugs PV in Bezug auf die Route,
b) in Abhängigkeit von dieser Position des Fahrzeugs PV, Identifikation des nächsten Anweisungspunkts PI-next der Route, dem eine Führungsanweisung zugewiesen ist,
c) Berechnen der Entfernung PV/PI-next zwischen der aktuellen Position des Fahrzeugs und dem nächsten Anweisungspunkt PI,
wobei das Verfahren **dadurch gekennzeichnet ist, dass** es außerdem die folgenden Schritte aufweist:
d) Berechnen der Entfernung PV/PI-last zwischen der aktuellen Position des Fahrzeugs und dem letzten Anweisungspunkt PI,
e) Übergang der verwendeten Darstellungsmodus der Route auf den regionalen Modus R, wenn die Entfernung PV/PI-next größer ist als ein Schwellenwert HIGH, und die Entfernung PV/PI-last größer ist als ein Schwellenwert CHANGE,
f) Übergang des verwendeten Darstellungsmodus der Route auf den lokalen Modus L, wenn die Entfernung PV/PI-next kleiner ist als ein Schwellenwert LOW,
wobei der Wert, der diesem Schwellenwert HIGH zugewiesen ist, größer ist als der, der dem Schwellenwert LOW zugewiesen ist.

2. Führungsverfahren für Straßenfahrzeug nach Anspruch 1, bei dem der dem Schwellenwert HIGH zugewiesene Wert mehr als zweimal größer ist als der dem Schwellenwert LOW zugewiesene.

3. Führungsverfahren für Straßenfahrzeug nach einem der vorhergehenden Ansprüche, bei dem der Schwellenwert HIGH einer Entfernung PV/PI-next größer als 15 km und vorzugsweise größer als 20 km entspricht.

4. Führungsverfahren für Straßenfahrzeug nach einem der vorhergehenden Ansprüche, bei dem der Schwellenwert CHANGE einer Entfernung PV/PI-last größer als 150 m und vorzugsweise größer als 1 km entspricht.

5. Führungsverfahren für Straßenfahrzeug nach einem der vorhergehenden Ansprüche, bei dem der Schwellenwert LOW einer Entfernung PV/PI-next kleiner als 10 km und vorzugsweise kleiner als 5 km entspricht.

6. Führungsverfahren für Straßenfahrzeug nach einem der vorhergehenden Ansprüche, bei dem der aktive Sektor (10) virtuell die Mobilität des Fahrzeugs in seiner unmittelbaren Umgebung wiedergibt.

7. Führungsverfahren für Straßenfahrzeug nach einem der vorhergehenden Ansprüche, bei dem der erklärende Sektor (20), solange das Fahrzeug seinen nächsten angezeigten Anweisungspunkt PI nicht überschritten hat, auf stationäre Art eine schematische Darstellung (21) darstellt, die den detaillierten geometrischen Aufbau dieses Anweisungspunkts PI erklärt.

8. Führungsvorrichtung für Straßenfahrzeug, die mindestens einen Prozessor aufweist, der fähig ist, mindestens einen Routenteil zu berechnen, Umsetzungsanweisungen, ein Standortbestimmungsmittel, das es erlaubt, in Echtzeit Informationen über die Position des entlang der Route zu führenden Fahrzeugs zu liefern, ein Anzeigemittel, das es erlaubt, eine visuelle Darstellung mindestens eines Routenteils sowie der Position des entlang dieser Route geführten Fahrzeugs zu liefern, wobei die Vorrichtung speziell für das Umsetzen des Führungsverfahrens nach einem der Ansprüche 1 bis 7 angepasst ist.

9. Führungsvorrichtung nach Anspruch 8, bei der der dem Schwellenwert HIGH zugewiesene Wert mehr als zweimal größer ist als der dem Schwellenwert LOW zugewiesene.

## Claims

1. Guiding process for a road vehicle, which on the one hand, from part of an itinerary between a point of departure 0 and an arrival point A comprising a plurality of instruction points PI associated with guiding instructions, and on the other hand from information in real time on the position of the vehicle along the said itinerary, enables display means to represent at least one active portion PA of the itinerary as well as the position of the vehicle in real time on the said active portion and an adjacent portion of the said itinerary still to come, according to two distinct representation modes consisting in a local mode L and a regional mode R;
• the local mode L comprising on the one hand an active sector (10), with a representation of an active portion (11) of the itinerary and the position of the guided vehicle (12) along this active portion, and on the other hand an explanatory sector (20) comprising a schematic representation (21) of the next instruction point PI which shows schematically the elements of the road network, enabling a precise illustration of the type of manoeuvre to be carried out and where to carry it out;
• the regional mode R consisting in a representation of a geographical zone containing in particular road sections that correspond to at least part of the itinerary (31) to be followed which includes the active portion of the itinerary and a buffer zone (33), the sections corresponding to those of the itinerary still to be followed being highlighted;
the transition mode between these two modes being determined as a function of the distance between the current position of the vehicle and the next instruction point PI, with the following steps:
a) the position PV of the vehicle is determined in relation to the itinerary;
b) as a function of this vehicle position PV, the next instruction point next-PI of the itinerary associated with a guiding instruction is identified;
c) the distance PV/next-PI between the vehicle's current position and the next instruction point PI is calculated;
the process being **characterized in that** it further comprises the following steps:
d) the distance PV/last-PI between the vehicle's current position and the last instruction point PI is calculated;
e) if the distance PV/next-PI is larger than a HIGH threshold and the distance PV/last-PI is larger than a CHANGE threshold, the itinerary presentation mode used changes to the regional mode R;
f) if the distance PV/next-PI is smaller than a LOW threshold, the itinerary presentation mode used changes to the local mode L;
the value allocated to the HIGH threshold being larger than that allocated to the LOW threshold.

2. Guiding process for a road vehicle according to claim 1, in which the value allocated to the HIGH threshold is more than twice as much as that allocated to the LOW threshold.

3. Guiding process for a road vehicle according to any of the preceding claims, in which the HIGH threshold corresponds to a PV/next-PI distance larger than 15 km and preferably larger than 20 km.

4. Guiding process for a road vehicle according to any of the preceding claims, in which the CHANGE threshold corresponds to a PV/last-PI distance larger than 150 m and preferably larger than 1 km.

5. Guiding process for a road vehicle according to any of the preceding claims, in which the LOW threshold corresponds to a PV/next-PI distance smaller than 10 km and preferably smaller than 5 km.

6. Guiding process for a road vehicle according to any of the preceding claims, in which the active sector (10) reproduces virtually the mobility of the vehicle in its immediate surroundings.

7. Guiding process for a road vehicle according to any of the preceding claims, in which, so long as the vehicle has not passed the next instruction point PI displayed, the explanatory sector (20) shows a fixed schematic representation (21) explaining the detailed geometrical structure of the said instruction point PI.

8. Guiding device for a road vehicle, comprising at least a processor capable of calculating at least a portion of an itinerary, implementation instructions, means for geolocalisation that enable information to be provided in real time on the position of the vehicle being guided along the said itinerary, display means to enable the provision of a visual representation of at least a portion of the itinerary as well as the said position of the guided vehicle along the itinerary, said guiding device being specially adapted for enabling the guiding process according to any of claims 1 to 7.

9. Guiding device according to claim 8, in which the value allocated to the HIGH threshold is more than twice as much as that allocated to the LOW threshold.
